# EUROPEAN PATENT SPECIFICATION

(11) **EP 2 838 711 B1**
(45) Date of publication and mention of the grant of the patent: **13.07.2016**
(21) Application number: 13716948.8
(22) Date of filing: 11.04.2013
(51) Int. Cl.: B29C 70/44, B29C 70/54, G01M 3/00, G01M 3/24, B29L 31/08, B29K 105/08

(54) **A METHOD OF FABRICATING A COMPOSITE PART AND AN APPARATUS FOR FABRICATING A COMPOSITE PART**
VERFAHREN ZUR HERSTELLUNG EINES VERBUNDTEILS UND VORRICHTUNG ZUR HERSTELLUNG EINES VERBUNDTEILS
PROCÉDÉ DE FABRICATION D'UNE PIÈCE COMPOSITE ET APPAREIL POUR LA FABRICATION D'UNE PIÈCE COMPOSITE

(30) Priority: 16.04.2012 DK 201270190; 16.04.2012 US 201261624414 P
(43) Date of publication of application: 25.02.2015
(73) Proprietor: Vestas Wind Systems A/S, 8200 Aarhus N (DK)
(72) Inventor: WARDROPPER, Steve, New Milton Hampshire BH25 7AB (GB)
(74) Representative: Vestas Patents Department
(86) International application number: PCT/DK2013/050100
(87) International publication number: WO 2013/156029

(56) References cited:
- KR-A- 20090 122 131
- US-A1- 2010 170 326
- US-A1- 2011 061 450

## Description

The present invention relates to a method and apparatus for fabricating a composite part. In particular, the present invention relates to a method and apparatus for detecting a leak during the fabrication of a composite part.

When forming a composite part using vacuum-assisted resin infusion technology, or prepreg technology, it is necessary to cover the composite part that you are fabricating with an impervious film typically called a vacuum bag. The vacuum bag is sealed against the mould to eliminate air leaks and to create a substantially sealed volume containing fibrous material. A vacuum pump then evacuates air from the substantially sealed volume to create an effective volume, which causes the vacuum bag to apply pressure to the fibrous material. This vacuum also causes, in the case of resin infusion, resin to be infused into dry fabric. In order to create an airtight seal between the vacuum bag and the mould, typically a butyl rubber sealing tape is used between the mould and the vacuum bag.

It is essential that there are no leaks of air into the sealed cavity. If there are holes into the sealed cavity, for example (i) between the mould and the vacuum bag caused by a hole or the like in the sealing tape, or (ii) in the vacuum bag itself, the resin may not be fully infused into the fibrous material and this can lead to fibrous dry spots in the material which have not been impregnated with resin. These dry spots will lead to a reduced strength of the composite part.

In an extreme example, this can lead to the composite part being discarded after manufacture as it does not have the required strength properties. In an example, a wind turbine blade shell may be over 60 metres in length, and even a tiny hole in the vacuum bag or seal can lead to the above-mentioned problems. When manufacturing very large composite parts it is, of course, important that the composite part you are fabricating is formed properly, else the whole part may need to be scrapped.

Accordingly, it is an object of the present invention to provide a method and apparatus for quickly and readily identifying any leaks that may exist at a mould cavity when fabricating a composite part.

US2011/061450 describes a method for locating pressure losses in vacuum bags used in the manufacturing of composite material parts. KR20090122131 describes a method of detecting fluid leakages in an atomic power plant.

According to a first aspect of the present invention there is provided a method of fabricating a composite part comprising fibre reinforced material in a mould, the method comprising the steps of: depositing fibre material on a mould surface; covering the fibre material with a vacuum film to create a mould cavity that contains the fibre material and is substantially sealed; evacuating air from the mould cavity; detecting if there is an air leak into the mould cavity with an acoustic camera unit during and/or after the step of evacuating air from the mould cavity.

The use of an acoustic camera to detect air leaks effectively cuts down on the cycle time it takes to fabricate a composite part. This is because an operator can quickly identify if there is an air leak and take repair steps to stop the air leak.

Preferably, the step of detecting if there is an air leak detects the location of an air leak.

The step of detecting if there is an air leak may comprise: acquiring an optical image of the mould; detecting sound waves emitted from the mould during and/or after the step of evacuating air from the mould cavity; generating an acoustic map based on the acquired optical image and the detected sound waves.

Preferably, the step of detecting if there is an air leak from the mould cavity comprises detecting sound waves emitted from the mould in a predetermined frequency band. Preferably, the predetermined frequency band is in the ultrasonic frequency range. The predetermined frequency band may be from 20 KHz to 50 KHz.

The step of detecting if there is an air leak may comprise: acquiring an optical image of the mould; detecting sound waves emitted from the mould before the step of evacuating air from the mould cavity; generating a first acoustic map based on the acquired optical image and the detected sound waves emitted from the mould before the step of evacuating air from the mould cavity; detecting sound waves emitted from the mould during and/or after the step of evacuating air from the mould cavity; generating a second acoustic map based on the acquired optical image and the detected sound waves emitted from the mould during and/or after the step of evacuating air from the mould cavity; and comparing the first and the second acoustic maps.

Preferably, the step of covering the fibre material with a vacuum film comprises: sealing the vacuum film to the mould surface with a sealing element.

The fibre material may comprise dry fabric. The method may further comprise the step of introducing uncured resin to the mould cavity after the step of evacuating air from the mould cavity and then curing the fibre material and the resin to form the composite part.

The fibre material may comprise prepreg material and the method may further comprise the step of curing the prepreg material after the step of evacuating air from the mould cavity to form the composite part.

Preferably, the composite part is a wind turbine component. The wind turbine component may be one of a blade shell, a blade spar, a blade spar cap or a blade web.

According to the invention, a method of fabricating a plurality of composite parts in a plurality of moulds is provided, each composite part being manufactured according to the method as described above. Preferably, one acoustic camera unit detects if there is an air leak for the plurality of moulds.

According to a second aspect of the present invention there is provided the use of acoustic camera to detect air leaks when manufacturing composite parts by vacuum moulding.

According to a third aspect of the present invention there is provided an apparatus for fabricating a composite part comprising fibre reinforced material, the apparatus comprising: a mould having a mould surface on which fibre material is deposited, in use; a vacuum film for covering the fibre material to create a mould cavity that contains the fibre material and is substantially sealed; a vacuum pump for evacuating air from the mould cavity; an acoustic camera unit for detecting if there is an air leak into the mould cavity.

The present invention will now be described, by way of example only, with reference to the accompanying drawings, in which:
Figure 1 is a schematic cross-section of a mould;
Figure 2 is a schematic of an acoustic camera unit and three moulds;
Figure 3a is a plan view of a wind turbine blade shell mould;
Figure 3b is a schematic of a computer with a display showing a generated acoustic map;
Figure 4 is a flow diagram of the process according to the invention.

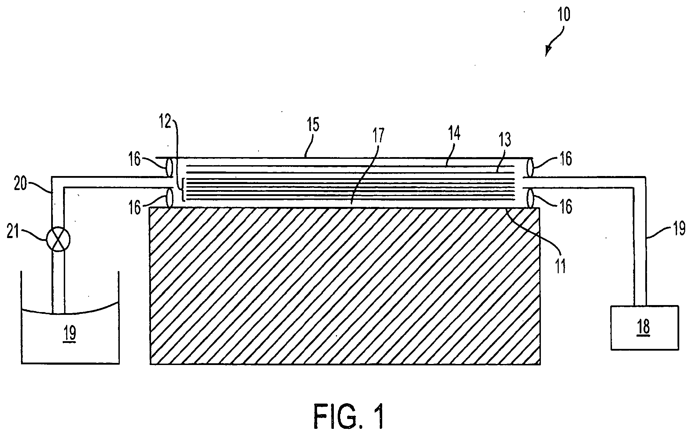

Figure 1 shows a schematic of a sectional view through a mould 10. The mould 10 is used for fabricating composite parts using resin infusion technology to create fibre reinforced plastic parts for a wind turbine blade shell, for example. Mould 10 comprises a mould surface 11, onto which is laid a stack of fibrous material, which in this example are glass fibre sheets 12. On top of the fibre stack 12 is placed a peel ply layer 13, and on top of the peel ply layer 13 is placed a resin distribution layer 14. On top of these layers is placed an impermeable vacuum bag 15, which is sealed with sealant tape 16 to the mould surface 11. The vacuum bag 15 is sealed against the mould 10 to eliminate air leaks and hence to create a substantially sealed mould cavity 17 which contains the fibre stack 12. When the mould cavity 17 is evacuated, the vacuum formed in the mould cavity is typically between 80 to 95 percent of a total vacuum. This is a vacuum infusion process which is well known in the art of composite processing and so is not explained in detail here.

A vacuum pump 18 removes air from the mould cavity 17 via duct 19 to create an effective vacuum in the mould cavity, which causes the vacuum bag 15 to apply pressure to the fibre stack 12. A source of resin 19 is provided through which resin is introduced into the mould cavity 17 via resin duct 20 and controlled by valve 21. The vacuum causes the resin to flow through the mould cavity 17 and distribute throughout the fibre stack 12. As the resin spreads it impregnates the fibre stack 12 and hot air is circulated around the mould cavity 17 to cure the resin. In this way, the composite part is created. The resin used in this example is a thermosetting resin, such as epoxy resin.

In order to create an airtight seal between the vacuum bag 15 and the mould surface 11 and provide openings for the vacuum duct 19 and the resin duct 20, the sealant tape is a butyl rubber sealing tape. The sealing tape 16 is inherently tacky and serves to adhere the vacuum film 15 to the mould surface 11 to create a seal. The sealing tape 16 is deformable and compresses under the vacuum pressure created by the vacuum pump 18 to fill any small gaps between the vacuum bag 15 and the mould surface 11 caused by any irregularities in these surfaces.

However, even with this seal, there is a danger that there will be a small hole between the mould surface 11 and the vacuum bag 15. This will result in air external to the mould cavity 17 being pulled into the fibre stack 12, since it is under an effective vacuum relative to the outside air pressure. This may lead to low quality composite components because the composite component may be formed with areas where no resin is present due to the air leak. This can lead to the composite component being discarded because it does not have the required strength properties.

Before infusing the fibre stack 12 with resin, it is necessary to first check the vacuum integrity of the mould cavity 17. To do this, a vacuum gauge (not shown) is used to measure the vacuum in the mould cavity 17. When the vacuum has been drawn by the pump 18 the pump 18 is isolated and a vacuum drop test is performed with the vacuum gauge. An operator will look to check that the vacuum in the mould cavity 17 does not drop by a predefined amount such as, for example, 2 percent in 10 minutes.

However, even if it is apparent that there is an air leak into the mould cavity 17 it can be extremely difficult for an operator to find the location of the air leak. In this example, which relates to manufacturing a wind turbine blade shell, the length of the blade is 60 metres and a vacuum bag 15 covers the entire the mould surface 11. This means that there is at least 120 metres of sealing tape 16 (i.e. 60 meters per side of the blade shell) and the air leak could be potentially at any position along these 120 metres of sealing tape, or there may even be multiple air leaks. In addition, there can even be an air leak from a hole within the actual vacuum bag 15. As can be appreciated, finding the location of the air leak and being satisfied that air leak is causing the drop in the mould cavity is extremely time-consuming.

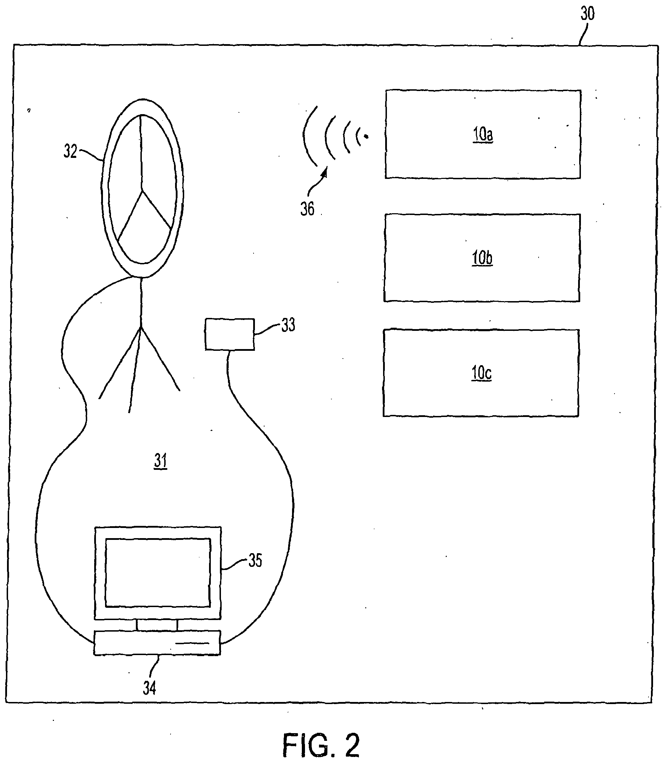

Figure 2 shows an apparatus according to the invention for detecting leaks from a number of different moulds 10. Figure 2 illustrates, schematically, a plan view of a factory shop floor 30 which has three moulds within the shop floor, designated as 10a, 10b and 10c.

An acoustic camera unit 31 is provided to detect leaks from the moulds, 10a, 10b and 10c. The acoustic camera unit 31 comprises an acoustic camera 32, an optical camera 33, and a computer 34 having a display 35. The acoustic camera 31 is configured to detect and identify leaks from the moulds, 10a, 10b and 10c. In brief, the acoustic camera unit 31 supplies an optical image of the moulds through the camera 33 and on this optical image is superimposed an acoustic map taken by the acoustic camera 32. Any leaks of air at the moulds, will generate sound and the acoustic control unit 31 will identify that leak of air, through the sound emitted. The location of this air leak can be determined by the acoustic camera 32 and shown on the display 35. In Figure 2, a leak of air is identified at mould 10a through the schematic of the sound waves 36. After a mould cavity 17 has been evacuated, and there is an air leak at the mould cavity such that air external to the mould cavity 17 flows into the mould cavity there will be a "hiss" as air is sucked into the mould cavity 17. This hiss is a noise in the ultrasonic range, typically between 20 KHz and 50 KHz.

The acoustic camera 32 comprises an array of microphones uniformly distributed about a circular tube which is fastened to a tripod. The array of microphones is connected by a cable to the computer 34 which comprises a processor for generating an acoustic map based on the sound recorded by the microphone array and from the image acquired by the optical camera 33 which is also connected to the computer by a cable. The camera 33 may be a still camera or it may be a video camera configured to take images at, for example, six frames per second.

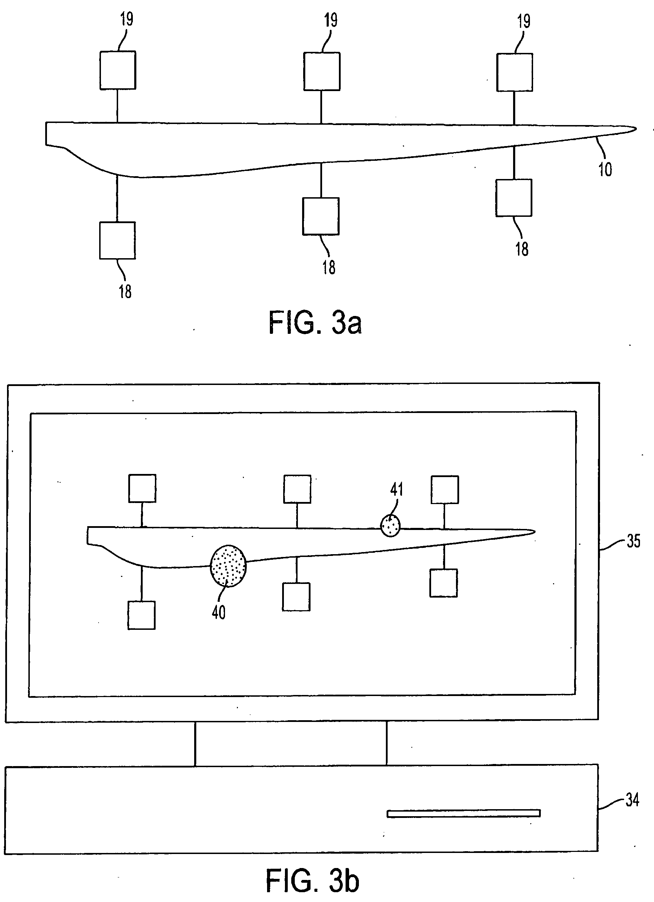

Figures 3a and 3b show how the acoustic camera unit 31 works in practice. In Figure 3a, the mould 10 is a wind turbine blade shell mould which is 60 metres in length. Figure 3a is a plan view of the shell mould 10. Due to the size of the mould, there are three vacuum pumps 18 and three sources of resin 19 to ensure that the fibre material laid in the mould 10 is fully impregnated by the resin. After the mould cavity 17 has been evacuated an optical image is acquired by the camera 33 of the mould 10 and this is displayed on the computer display 35. This is shown in Figure 3b. The acoustic camera 32 detects sources of sound from the mould 10 and superimposes them on top of the optical image. As shown in Figure 3b, the black circles 40 and 41 indicate that there are sources of sound from the mould cavity at those particular locations. These sources of sound result from leaks between the vacuum bag 15 and the mould surface 11 such that air flows into the mould cavity creating noise. The acoustic camera unit 31 does not only identify the location of the noise but it also indicates the magnitude of the noise.

For example, as can be seen in Figure 3b there are two sources of noise, source 40 on the trailing edge of the mould and source 41 on the leading edge of the mould. The size of the circles indicates to the operator the severity of the leak. So, as can be seen in Figure 3b, the leak identified by 40 is shown as a larger circle than the leak identified by 41 and therefore the operator will know that the leak identified by 40 is more significant than the leak identified by 41.

Of course, in a factory environment where the moulds are located there will be a great deal of other noise sources rather than leaks into the mould cavities 17. For example, there will be operator noise and there will be noise from the vacuum pumps 18. The acoustic camera unit 31 is tuned so that it is frequency selective - it only shows sound sources at the range of frequencies that are likely to occur from a leak into the mould cavity 17. As mentioned above, air flowing into the mould cavity 17 will generate a sound in the ultrasonic range and the acoustic camera unit 31 is configured so that it only displays sources of sound in this ultrasonic range. In this way, other sound sources such as the vacuum pumps 18 or operator noise are not shown on the display 45. This makes it particularly easy for the operator to identify the sources of leaks at the moulds.

The acoustic camera unit 31 identifies the sources of leaks in real time, that is the acoustic image generated on a display 35 will represent whatever sources of sound are occurring at the mould at any given time. To facilitate this, the camera 33 may be a video camera to also acquire the optical images in real time.

The acoustic camera unit 31 can save a great deal of time and money - leaks from the mould can be identified extremely quickly along with their location. Sound sources from the mould 10, which indicate that there are leaks, can be precisely located, even at distances of several tens of metres. Therefore, as shown in Figure 2, a single acoustic camera unit 31 can be used to monitor a plurality of moulds. In the example shown in Figure 2 only three moulds are shown, but the skilled person will realise that any number of moulds can be placed within range of the acoustic camera. In a particular example of the invention, the acoustic camera 32 and the optical camera 33 may be mounted to the ceiling of a factory so that it looks down, in plan-view, on all of the moulds on the factory floor.

A particular advantage of the acoustic camera unit 31 is that rather than an operator looking for sound sources on each mould, a plurality of extremely large moulds can be monitored simultaneously allowing an operator to quickly identify any leaks.

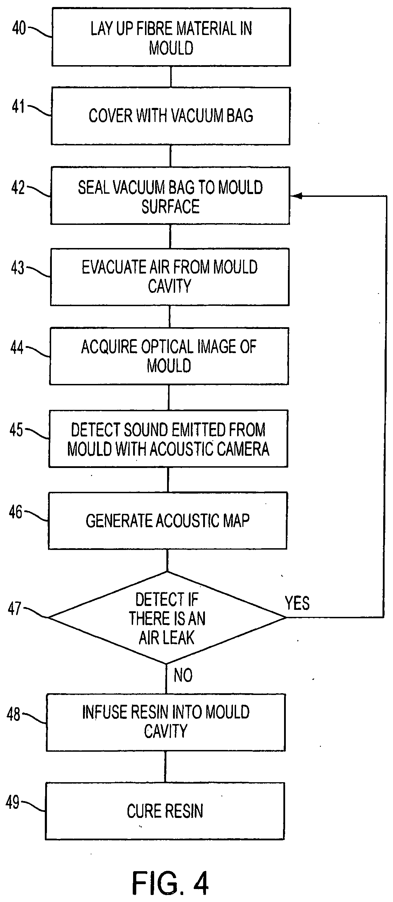

Figure 4 is a flowchart of the process for detecting leaks. In step 40 the fibre material is laid up on the mould surface in a stack 12. Although only a stack of fibre material 12 has been described, the skilled person will appreciate that other laminate forms can be constructed such as composite sandwich components with fibre skins and a honeycomb core for example. In step 41 the fibre stack 12 is covered with a vacuum bag and in step 42 the vacuum bag is sealed to the mould surface to create the sealed mould cavity.

In step 43 the vacuum pump is operated in order to evacuate air from the mould cavity and to form an effective vacuum within the mould cavity. At step 44 an optical image of the mould is acquired and as noted previously this can either be with a still camera or with a video camera. At step 45 any sound emitted from the mould is detected with an acoustic camera. The acquired optical image of the mould and the sound detected with the acoustic camera are superimposed together to form an acoustic map in step 46 and this is shown on a display for the operator to monitor.

At step 47 the operator determines if there is an air leak from the mould and the air leak may come from a hole in the sealing between the vacuum bag and the mould surface or an actual hole in the vacuum bag. The operator determines if there is an air leak based on any sources of sound that are identified in the acoustic map.

If the operator determines that there is an air leak, the air leak should be fixed by resealing the vacuum bag to the mould surface at step 42 (or if it is a hole in the vacuum bag itself the hole can be repaired). Once the operator is confident that there are no air leaks then the step of infusing resin into the mould cavity can commence at step 48. Subsequent to the step of infusing resin into the mould cavity and into the fibre material, the resin is cured at step 49 at a predetermined temperature and for a predetermined time as is well known in the art to form the composite part.

The step of detecting sound waves emitted from the mould with the acoustic camera 32 can take place either during or after the step of evacuating air from the mould cavity. When the pump 18 is actually evacuating air from the mould cavity 17 and there is a leak in the seal, air will still be drawn from the outside into the mould cavity 17 which will generate a hissing sound which can be detected by the acoustic camera.

As has been described earlier, the acoustic camera unit 31 is configured so that it only detects sound emitted from the moulds in a particular frequency band in the ultrasonic range. However, there may be equipment in the factory 30 that also emits sound in the ultrasonic range and therefore these sounds would also be represented in the acoustic map - and may cause the operator to have a problem in identifying if there are any leaks into the mould cavity. To address this, the acoustic camera unit 31 can generate a first acoustic map before the air has been evacuated from the mould cavity. This first acoustic map will therefore include any sounds that are emitted by other equipment in the factory in the ultrasonic range. Then, the mould cavity 17 can be evacuated by using the vacuum pump 18 and the acoustic camera unit 31 can generate a second acoustic map after the mould cavity 17 has been evacuated.

The first and second acoustic maps can then be compared and any sources of sound that are identified in both the first and second acoustic maps can be disregarded because they cannot be an air leak, as the mould cavity was not evacuated during the generation of the first acoustic map. In this way, the operator can readily identify if there are any air leaks present.

The acoustic camera 32 and the optical camera 33 may be remote from the computer 34 and the display 35 allowing an operator to be in another part of the factory to where the moulds are positioned. In addition, the acoustic camera unit 31 may be portable allowing it to be moved to different positions in the factory to monitor different moulds.

Although the invention has been described with reference to resin infusion technology and in particular vacuum-assisted resin infusion technology using dry fibre material 12, the invention is also applicable to other composite processing techniques such as prepreg processing. In prepreg processing, the fibre material laid in the mould is pre-impregnated with the resin and therefore the source of resin 19 is not required. However, in prepreg processing it is still necessary to apply a vacuum bag 15 over the composite material and evacuate air from the mould cavity and so the invention can also detect leaks in a prepreg processing technique.

The invention has been described with reference to the manufacture of a wind turbine blade shell. However, the invention is also applicable to the manufacture of other composite components including wind turbine components such as the spar of a wind turbine blade, the spar cap of a wind turbine blade, the shear web of a wind turbine blade or the nacelle of a wind turbine.

## Claims

1. A method of fabricating a composite part comprising fibre reinforced material in a mould (10), the method comprising the steps of:
depositing fibre material (12) on a mould surface (11);
covering the fibre material (12) with a vacuum film (15) to create a mould cavity (17) that contains the fibre material and is substantially sealed;
evacuating air from the mould cavity (17); **characterised by**
detecting if there is an air leak into the mould cavity with an acoustic camera unit (31) during and/or after the step of evacuating air from the mould cavity.

2. A method according to claim 1, wherein the step of detecting if there is an air leak detects the location of an air leak.

3. A method according to claims 1 or 2, wherein the step of detecting if there is an air leak comprises:
acquiring an optical image of the mould (10);
detecting sound waves emitted from the mould (10) during and/or after the step of evacuating air from the mould cavity (17);
generating an acoustic map based on the acquired optical image and the detected sound waves.

4. A method according to any one of the preceding claims, wherein the step of detecting if there is an air leak from the mould cavity (17) comprises detecting sound waves emitted from the mould (10) in a predetermined frequency band.

5. A method according to claim 4, wherein the predetermined frequency band is in the ultrasonic frequency range.

6. A method according to claims 4 or 5, wherein the predetermined frequency band is from 20 KHz to 50 KHz.

7. A method according to claims 1 or 2, wherein the step of detecting if there is an air leak comprises:
acquiring an optical image of the mould (10);
detecting sound waves emitted from the mould before the step of evacuating air from the mould cavity (17) ;
generating a first acoustic map based on the acquired optical image and the detected sound waves emitted from the mould (10) before the step of evacuating air from the mould cavity (17);
detecting sound waves emitted from the mould (10) during and/or after the step of evacuating air from the mould cavity (17);
generating a second acoustic map based on the acquired optical image and the detected sound waves emitted from the mould (10) during and/or after the step of evacuating air from the mould cavity (17); and
comparing the first and the second acoustic maps.

8. A method according to any one of the preceding claims, wherein the step of covering the fibre material (12) with a vacuum film (15) comprises:
sealing the vacuum film to the mould surface with a sealing element (16).

9. A method according to any one of the preceding claims, wherein the fibre material (12) comprises dry fabric.

10. A method according to claim 9, further comprising the step of:
introducing uncured resin to the mould cavity (17) after the step of evacuating air from the mould cavity and then curing the fibre material (12) and the resin to form the composite part.

11. A method according to any one of claims 1 to 8, wherein the fibre material (12) comprises prepreg material and the method further comprises the step of:
curing the prepreg material after the step of evacuating air from the mould cavity (17) to form the composite part.

12. A method according to any one of the preceding claims, wherein the composite part is a wind turbine component.

13. A method according to claim 12, wherein the wind turbine component is one of a blade shell, a blade spar, a blade spar cap or a blade web.

14. A method of fabricating a plurality of composite parts in a plurality of moulds (10a, 10b, 10c), each composite part being manufactured according to the method of any one of the preceding claims.

15. A method of fabricating a plurality of composite parts according to claim 14, wherein one acoustic camera unit (31) detects if there is an air leak for a plurality of moulds(10a, 10b, 10c).

16. Use of an acoustic camera (32) to detect air leaks when manufacturing composite parts with a vacuum moulding process.

17. An apparatus for fabricating a composite part comprising fibre reinforced material (12), the apparatus comprising:
a mould (10) having a mould surface (11) on which fibre material (12) is deposited, in use;
a vacuum film (15) for covering the fibre material (12) to create a mould cavity (17) that contains the fibre material and is substantially sealed;
a vacuum pump (18) for evacuating air from the mould cavity (17); **characterised by**
an acoustic camera unit (31) for detecting if there is an air leak into the mould cavity (17).

## Patentansprüche

1. Ein Verfahren zur Herstellung eines Verbundteils, das ein faserverstärktes Material in einer Form (10) aufweist, das Verfahren aufweisend die Schritte von:
Deponieren des Fasermaterials (12) auf einer Formoberfläche (11);
Bedecken des Fasermaterials (12) mit einer Vakuumfolie (15), um einen Formhohlraum (17) zu schaffen, der das Fasermaterial enthält und im Wesentlichen abgedichtet ist;
Entleeren von Luft aus dem Formhohlraum (17); **gekennzeichnet durch**
Detektieren, ob es einen Luftaustritt in den Formhohlraum hinein gibt, mit einer akustischen Kameraeinheit (31) während und/ oder nach dem Schritt des Entleerens von Luft aus dem Formhohlraum.

2. Ein Verfahren nach Anspruch 1, wobei der Schritt von dem Detektieren, ob es einen Luftaustritt gibt, den Ort von einem Luftaustritt detektiert.

3. Ein Verfahren nach den Ansprüchen 1 oder 2, wobei der Schritt von dem Detektieren, ob es einen Luftaustritt gibt, aufweist:
Aufnehmen eines optischen Bildes von der Form (10);
Detektieren von aus der Form (10) emittierten Schallwellen während und/oder nach dem Schritt von dem Entleeren von Luft aus dem Formhohlraum (17);
Erzeugen einer akustischen Karte basierend auf dem aufgenommenen optischen Bild und den detektierten Schallwellen.

4. Ein Verfahren nach einem der vorangegangenen Ansprüche, wobei der Schritt von dem Detektieren, ob es einen Luftaustritt aus dem Formhohlraum (17) gibt, aufweist Detektieren von aus der Form (10) emittierten Schallwellen in einem vorherbestimmten Frequenzband.

5. Ein Verfahren nach Anspruch 4, wobei das vorherbestimmte Frequenzband der Ultraschallfrequenzbereich ist.

6. Ein Verfahren nach den Ansprüchen 4 oder 5, wobei das vorherbestimmte Frequenzband von 20 kHz bis 50 kHz ist.

7. Ein Verfahren nach den Ansprüchen 1 oder 2, wobei der Schritt von dem Detektieren, ob es einen Luftaustritt gibt, aufweist:
Aufnehmen eines optischen Bildes von der Form (10);
Detektieren von aus der Form emittierten Schallwellen vor dem Schritt von dem Entleeren von Luft aus dem Formhohlraum (17);
Erzeugen einer ersten akustischen Karte basierend auf dem aufgenommenen optischen Bild und den detektierten aus der Form (10) emittierten Schallwellen vor dem Schritt von dem Entleeren von Luft aus dem Formhohlraum (17);
Detektieren von aus der Form (10) emittierten Schallwellen während und/oder nach dem Schritt von dem Entleeren von Luft aus dem Formhohlraum (17);
Erzeugen einer zweiten akustischen Karte basierend auf dem aufgenommenen optischen Bild und den detektierten aus der Form (10) emittierten Schallwellen während und/oder nach dem Schritt von dem Entleeren von Luft aus dem Formhohlraum (17); und
Vergleichen der ersten und zweiten akustischen Karten.

8. Ein Verfahren nach einem von den vorangegangenen Ansprüchen, wobei der Schritt von dem Abdecken des Fasermaterials (12) mit einer Vakuumfolie (15) aufweist:
Abdichten der Vakuumfolie gegenüber der Formoberfläche mit einem Abdichtungselement (16).

9. Ein Verfahren nach einem der vorangegangenen Ansprüche, wobei das Fasermaterial (12) ein trockenes Gewebe aufweist.

10. Ein Verfahren nach Anspruch 9, weiter aufweisend den Schritt von:
Einbringen von nicht ausgehärtetem Harz in den Formhohlraum (17) nach dem Schritt von dem Entleeren von Luft aus dem Formhohlraum und dann Härten des Fasermaterials (12) und des Harzes, um das Verbundteil zu formen.

11. Ein Verfahren nach einem der Ansprüche 1 bis 8, wobei das Fasermaterial (12) ein Prepreg-Material aufweist und das Verfahren weiter aufweist die Schritte von:
Härten des Prepreg-Materials nach dem Schritt von dem Entleeren von Luft aus dem Formhohlraum (17), um das Verbundteil zu formen.

12. Ein Verfahren nach einem der vorangegangenen Ansprüche, wobei das Verbundteil eine Windturbinenkomponente ist.

13. Ein Verfahren nach Anspruch 12, wobei die Windturbinenkomponente eines von einer Blattschale, einem Blattholm, einem Blattholmgurt oder einem Blattgewebe ist.

14. Ein Verfahren zur Herstellung einer Vielzahl von Verbundteilen in einer Vielzahl von Formen (10a, 10b, 10c), wobei jedes Verbundteil nach dem Verfahren von einem der vorangegangenen Ansprüche hergestellt wird.

15. Ein Verfahren zur Herstellung einer Vielzahl von Verbundteilen nach Anspruch 14, wobei eine akustische Kameraeinheit (31) detektiert, ob es einen Luftaustritt gibt, für eine Vielzahl von Formen (10a, 10b, 10c).

16. Verwendung einer akustischen Kamera (32) zum Detektieren von Luftaustritten bei der Herstellung von Verbundteilen mit einem Vakuumformprozess.

17. Eine Vorrichtung zur Herstellung eines Verbundteils, das ein faserverstärktes Material (12) aufweist, wobei die Vorrichtung aufweist:
eine Form (10) mit einer Formoberfläche (11) auf der während einer Verwendung Fasermaterial (12) deponiert wird;
eine Vakuumfolie (15) zum Bedecken des Fasermaterials (12), um einen Formhohlraum (17) zu schaffen, der das Fasermaterial enthält und im Wesentlichen abgedichtet ist;
eine Vakuumpumpe (18) zum Entleeren von Luft aus dem Formhohlraum (17), **gekennzeichnet durch**
eine akustische Kameraeinheit (31) zum Detektieren, ob es einen Luftaustritt in den Formhohlraum (17) gibt.

## Revendications

1. Procédé de fabrication d'une pièce composite comprenant un matériau renforcé par des fibres dans un moule (10), le procédé comprenant les étapes suivantes :
de dépôt de matériau fibreux (12) sur une surface de moule (11);
de recouvrement du matériau fibreux (12) avec un film sous vide (15) pour créer une cavité de moule (17) qui contient le matériau fibreux et est sensiblement scellée ;
d'évacuation de l'air de la cavité de moule (17) ; **caractérisé par**
le fait de détecter s'il existe une fuite d'air dans la cavité de moule avec une unité de caméra acoustique (31) pendant et/ou après l'étape d'évacuation d'air de la cavité de moule.

2. Procédé selon la revendication 1, dans lequel l'étape consistant à détecter s'il existe une fuite d'air détecte l'emplacement d'une fuite d'air.

3. Procédé selon la revendication 1 ou 2, dans lequel l'étape consistant à détecter s'il existe une fuite d'air comprend :
une acquisition d'une image optique du moule (10) ;
une détection d'ondes sonores émises à partir du moule (10) pendant et/ou après l'étape d'évacuation d'air de la cavité de moule (17) ;
une génération d'une carte acoustique sur la base de l'image optique acquise et les ondes sonores détectées.

4. Procédé selon l'une quelconque des revendications précédentes, dans lequel l'étape consistant à détecter s'il existe une fuite d'air provenant de la cavité de moule (17) comprend une détection d'ondes sonores émises à partir du moule (10) dans une bande de fréquences prédéterminée.

5. Procédé selon la revendication 4, dans lequel la bande de fréquences prédéterminée est dans la gamme de fréquences ultrasonores.

6. Procédé selon la revendication 4 ou 5, dans lequel la bande de fréquences prédéterminée est de 20 KHz à 50 KHz.

7. Procédé selon la revendication 1 ou 2, dans lequel l'étape consistant à détecter s'il existe une fuite d'air comprend :
une acquisition d'une image optique du moule (10) ;
une détection d'ondes sonores émises à partir du moule avant l'étape d'évacuation d'air de la cavité de moule (17) ;
une génération d'une première carte acoustique sur la base de l'image optique acquise et les ondes sonores détectées émises à partir du moule (10) avant l'étape d'évacuation d'air de la cavité de moule (17) ;
une détection d'ondes sonores émises à partir du moule (10) pendant et/ou après l'étape d'évacuation d'air à partir de la cavité de moule (17) ;
une génération d'une seconde carte acoustique sur la base de l'image optique acquise et des ondes sonores détectées émises à partir du moule (10) pendant et/ou après l'étape d'évacuation d'air à partir de la cavité de moule (17) ; et
une comparaison de la première et de la seconde cartes acoustiques.

8. Procédé selon l'une quelconque des revendications précédentes, dans lequel l'étape de recouvrement du matériau fibreux (12) avec un film sous vide (15) comprend :
un scellement du film sous vide à la surface de moule avec un élément de scellement (16).

9. Procédé selon l'une quelconque des revendications précédentes, dans lequel le matériau fibreux (12) comprend du tissu sec.

10. Procédé selon la revendication 9, comprenant en outre l'étape suivante :
d'introduction de résine non durcie dans la cavité de moule (17) après l'étape d'évacuation d'air à partir de la cavité de moule et ensuite de durcissement du matériau fibreux (12) et de la résine pour former la pièce composite.

11. Procédé selon l'une quelconque des revendications 1 à 8, dans lequel le matériau fibreux (12) comprend du matériau préimprégné et le procédé comprend en outre l'étape suivante :
de durcissement du matériau préimprégné après l'étape d'évacuation d'air à partir de la cavité de moule (17) pour former la pièce composite.

12. Procédé selon l'une quelconque des revendications précédentes, dans lequel la pièce composite est un composant d'éolienne.

13. Procédé selon la revendication 12, dans lequel le composant d'éolienne est l'un d'une paroi de pale, d'un longeron de pale, d'un raidisseur de longeron de pale ou d'une poutrelle de pale.

14. Procédé de fabrication d'une pluralité de pièces composites dans une pluralité de moules (10a, 10b, 10c), chaque pièce composite étant fabriquée selon le procédé de l'une quelconque des revendications précédentes.

15. Procédé de fabrication d'une pluralité de pièces composites selon la revendication 14, dans lequel une unité de caméra acoustique (31) détecte s'il existe une fuite d'air pour une pluralité de moules (10a, 10b, 10c).

16. Utilisation d'une caméra acoustique (32) pour détecter des fuites d'air lors d'une fabrication de pièces composites avec un processus de moulage sous vide.

17. Appareil pour la fabrication d'une pièce composite comprenant un matériau renforcé par des fibres (12), l'appareil comprenant :
un moule (10) ayant une surface de moule (11) sur laquelle est déposé un matériau fibreux (12), en utilisation ;
un film sous vide (15) destiné au recouvrement du matériau fibreux (12) pour créer une cavité de moule (17) qui contient le matériau fibreux et est sensiblement scellée ;
une pompe à vide (18) pour évacuer de l'air de la cavité de moule (17) ; **caractérisé par**
une unité de caméra acoustique (31) pour détecter si une fuite d'air existe dans la cavité de moule (17).
